# EUROPEAN PATENT SPECIFICATION

(11) **EP 1 435 739 B1**
(45) Date of publication and mention of the grant of the patent: **31.05.2006**
(21) Application number: 03258203.3
(22) Date of filing: 23.12.2003
(51) Int. Cl.: H04N 7/24, H04L 12/56

(54) **Media file distribution system and method**
System und Verfahren zur Distribution von Mediadateien
Système et méthode pour distribution de fichiers média

(30) Priority: 30.12.2002 GB 0230278
(43) Date of publication of application: 07.07.2004
(73) Proprietor: DigiFi Limited, London WC2N 6AA (GB)
(72) Inventor: Neill, Nicholas Graham, Sandhurst, Kent TN18 5NU (GB); Conington, Nicholas Andrew, Cranbrook, Kent TN17 2QG (GB)
(74) Representative: Musker, David Charles

(56) References cited:
- EP-A- 1 182 871
- EP-A- 1 209 638
- WO-A-01/47248
- WO-A-01/56297
- US-A1- 2002 039 393
- US-A1- 2002 073 229

## Description

The present invention relates to a media file distribution system and method.

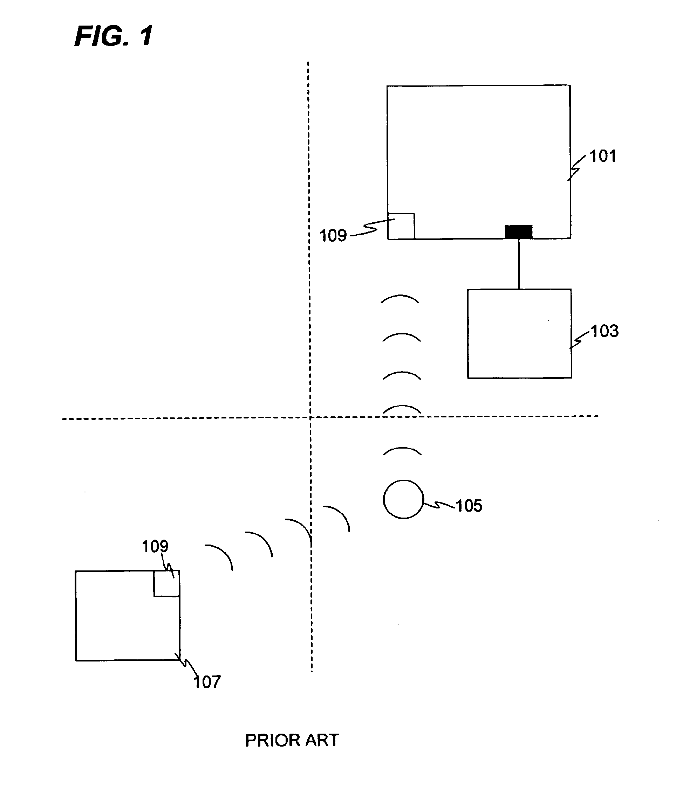

Media file distribution systems are used in homes, hotels and factories for distributing various types of media, such as music and video, over a specified area. Distribution systems have evolved from hard wired systems, wherein cabling such as twisted wire pair cabling is used to connect a limited number of media output devices to a media file server. The output devices are situated in the vicinity of the server for providing different media files to different locations concurrently. Wireless remote control methods may be used for controlling the media file server. Other known wireless systems allow a handheld remote control unit 107 to communicate with one or more media file servers 101 from anywhere in the vicinity of a computer hub device 105, using wireless communication means 109, such as Bluetooth or the WLAN 802.11 standard. By utilising the computer hub device 105 to pass on the communication data from the remote control 107 to the media file server, playback from an output device 103 of the media file from the media file server is enabled, as shown in Figure 1.

Known systems are extremely expensive due to the complexity of the devices used and the number of different systems, such as media servers and computer hubs, required in setting up a complete working system.

One known system is disclosed in US patent application US 2002/0073229 A1, which discloses a home network system which includes a server comprising two tuners allowing two separate wireless clients to reproduce data from each tuner.

A further known system is disclosed in PCT application WO 01/47248 A2, which discloses a wireless system that allows multimedia content received in the home to be played in a remote device connected to the system via the Internet.

The present invention aims to overcome or at least alleviate one or more of the aforementioned problems. Further, the present invention provides the advantage of a system that requires less hardware, whilst increasing the connectability and ease of use of the system.

The present invention provides a media file distribution system comprising a media server and at least one satellite unit, the media server comprising a media file storage means adapted to store one or more media files, a first wireless communication means, and a first media file transfer means adapted to transfer one or more media files stored on a first medium to a second medium, the satellite unit comprising a second wireless communication means and a first output means adapted to play the one or more media files stored on the media server, the system characterised by: the satellite unit further comprising a second media file transfer means adapted to transfer further media files stored on a third medium to a fourth medium and a media file conversion means adapted to convert the one or more transferred further media files from an original format to a format other than the original format, wherein the second wireless communication means in association with the first wireless communication means is adapted to transfer the converted further media files to the media file storage means on the media server.

The present invention further provides a method of distributing media files comprising the steps of: storing media files in a media file storage means on a media server; setting up a wireless communication channel between the media server and at least one satellite unit; initiating the playing of a media file stored on the media server so the media file is played through the satellite unit; transferring one or more media files from a first medium onto a second medium using a first media file transfer means on the media server; the method characterised by the steps of: transferring one or more further media files from a third medium onto a fourth medium using a second media file transfer means on the satellite unit; and converting the one or more transferred further media files from an original format to a format other than the original format; and transferring the converted further media files to the media file storage means using the wireless communication channel.

The present invention provides the advantage of a system that allows different high quality media files to be played in a large number of different locations chosen by the user.

An embodiment of the present invention provides the advantage of allowing the user to add additional media files to the main storage system whilst being located in a different location from the main storage system.

Specific embodiments of the present invention will now be described by way of example only, with reference to the accompanying drawings, in which:
Figure 1 depicts an example of a known prior art system;
Figure 2 shows the layout of components used in an embodiment of the present invention;
Figure 3 shows an embodiment of a media server used in the present invention;
Figure 4 shows a first satellite device used in an embodiment of the present invention;
Figure 5 shows an embodiment of a mobile handheld computing device used in the present invention;
Figure 6 shows a second satellite device used in an embodiment of the present invention;
Figure 7 shows a flow diagram of a ripping procedure according to an embodiment of the present invention;
Figure 8 shows a flow diagram of a media file transfer according to an embodiment of the present invention.
Figure 9 shows a media file server according to an embodiment of the present invention.

### FIRST EMBODIMENT

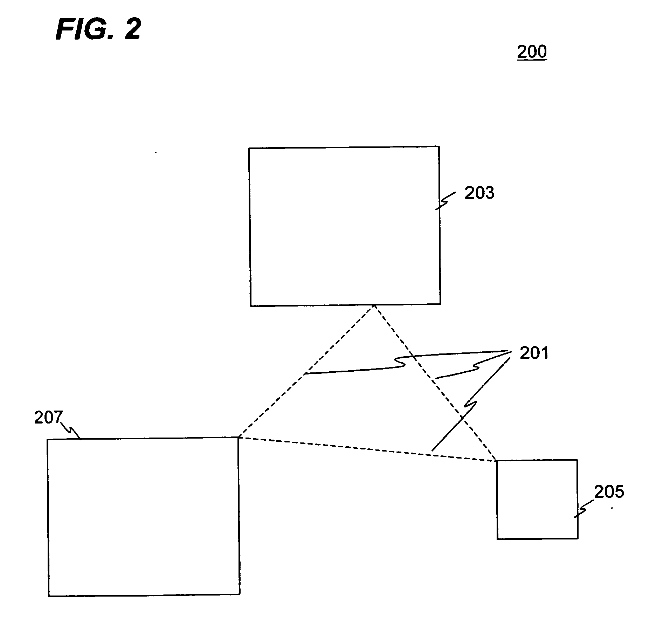

The first part of a media file distribution system 200 is shown in Figure 2, and comprises a media server 203, a first satellite device 207 and a mobile hand held computing device 205, such as a PDA (personal digital assistant).

A wireless communication link 201 is set up between the components of the system, creating a peer-to-peer network. The wireless communication method may preferably be executed using WLAN 802.11b (known as Wi-Fi), or may alternatively be Bluetooth or any other wireless communication means.

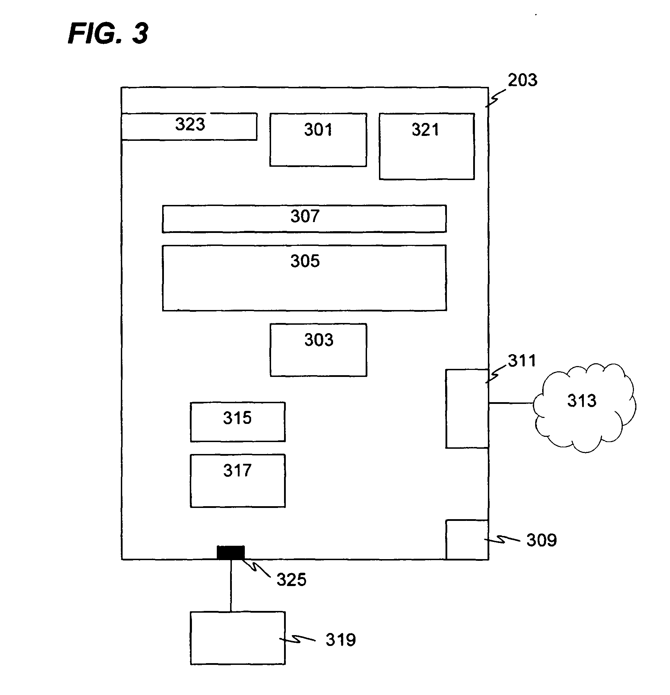

The media server 203 of the media file distribution system 200 is shown in more detail in Figure 3. The media server includes a drive 323 for receiving and reading media devices of various types, a media store 305, an output port 325, a modem 311 and a wireless communication device 309.

The media server 203 further includes the following software components used in conjunction with the hardware above: a ripping device 301, an encoder 321, a playlist manipulator 315, a media player 317, a utility service 303, a daemon program and a database server 307.

The term 'ripping' and 'ripped' as used in this specification means and incorporates the act of transferring a file from one medium to another medium through the use of a reading device and a software program.

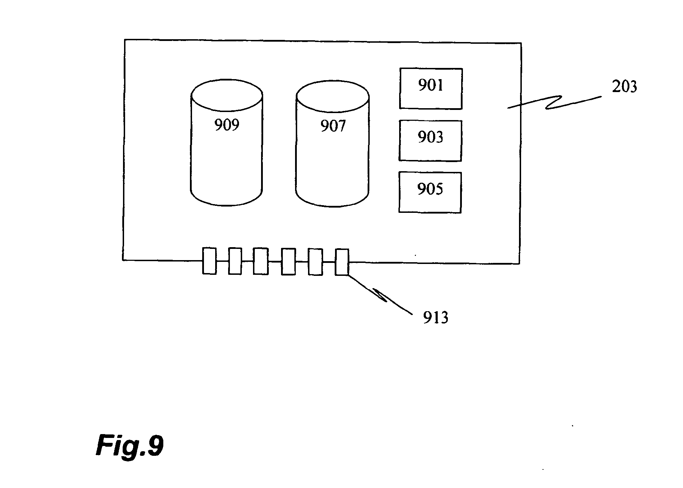

A hardware diagram of an embodiment of a media server 203 is further shown in Figure 9, wherein the server includes a hard drive 907, a media reading device 909, memory means 901, processing means 903, a modem 905 and a number of input and output ports 913.

In this embodiment the wireless communication device is a WLAN 802.11b device, which may be fitted to the media server 203 via an internal card slot, or alternatively an external connection may be made.

A media device, such as a compact disk (CD), or digital versatile/video disk (DVD) is inserted into the drive 323 of the media server 203 as shown in Figure 3, the drive 323 being capable of reading the media device. The drive 323 then attempts to read the media device, and if unsuccessful reports an error. If the drive successfully reads the media device 323, all media files stored on the media device are ripped automatically by the ripping device 301, i.e. they are transferred from the media device in their raw format to a different medium, such as the hard disk of the media server 203.

After ripping, the media files may be stored in their original format in the media store 305, or alternatively the media files can be encoded so they are changed from their original format to a different format. The media store 305 may be any form of large volume storage device, such as a hard disk drive.

If the user has selected the option of encoding the media files, then after the media files have been ripped from the media device, they are automatically encoded by the encoder 321 into a default format. For example, an audio CD when ripped will produce wave files (also known as wav files) with the extension .wav, and a user may choose all audio files to be encoded from a wav file to a wma (Windows ^{™} media audio) file, or an mp3 file.

The encoded file is stored in the media store 305 and the original file is marked for deletion by the utility service 303 running on the media server 203. The deletion of the original file may be automatic in which case the files are deleted by a daemon program running in the background when the user chooses to delete the files, or alternatively the files can be deleted upon start-up or shutdown of the system by the same daemon program. The appropriate media file and all references to it are removed from the system upon deletion.

The database server 307 running on the media server 203 is used to arrange and organise the media files into a database format. For example, Microsoft ^{™} SQL server may be used or alternatively Microsoft ^{™} Access, both of which are standard tools and are well known to persons skilled in the art.

The utility service 303 is used on the media file server 203 to control and organise the media files. For example, the utility service 303 allows for backup and restore functions of the media files to be carried out. Also, the database may be reset by the utility service 303 to remove old media files not further required and to repopulate the database from files found within the media store 305.

The user of the media file distribution system 200 may at any time insert a media device, such as a CD, into the drive 323, allowing the media files located on the media to be transferred from the original media, optionally encoded and then stored in the media file store 305 of the media server 203. This allows the user to transfer all media files from a cumbersome medium, such as compact disk (CD) or digital versatile/video disk (DVD), to a more conveniently centrally located storage format, such as a hard disk drive.

During the ripping of the media files, if the media device inserted into the drive of the media server 203 is detected as an audio CD, a lookup process is run to obtain further information related to the audio files on the CD.

The lookup process is run first, before any required encoding has been completed.

Firstly, an Internet connection is made via an ISP (Internet Service Provider) using the modem 311 of the media server 203. The ISP may be the user's own ISP or any other default ISP.

The ripping device 301 carries out the lookup process by creating a unique key from track info on the media, sending this information to a database service on the Internet 313, and receiving either relevant information based on the media file unique key, or a 'not found' response if the unique key is not recognised by the database service. The information may include for example, album title information, artist information, and titles of the tracks available for playing. This information is stored alongside the ripped tracks within the media store 305 of the media server 203.

If the media files ripped are unknown, i.e. if the unique key is not recognised at the database service website, the artist is labelled as unknown and the utility service 303 moves the file to a miscellaneous folder in the database. At a later point in time it is possible for the user to manually request a further lookup process, and if the media file associated information, i.e. the media file unique key, is then found, the utility service 303 will rename the media file and move the media file to a more appropriate folder relevant to the information found (e.g. a folder associated with a particular artist or genre).

The lookup process may be executed one compact disc at a time or alternatively the process may be run on a group of compact discs in order to reduce the time spent online and thus reduce any online charges incurred. It is also possible to schedule the lookup process until a regular scheduled connection is made in the morning or evening, for example when the media server 203 automatically connects to the Internet 313 in order to provide updates to the system, or upload usage information to a media file distribution system central database on the Internet 313.

After ripping the media files and carrying out any encoding required, the media files are placed in the media store 305 of the media server 203, and references to the files can then be placed in a playlist table if the music is to be played.

The playlist table is used by the playlist manipulator 315 to determine which media files are to be played.

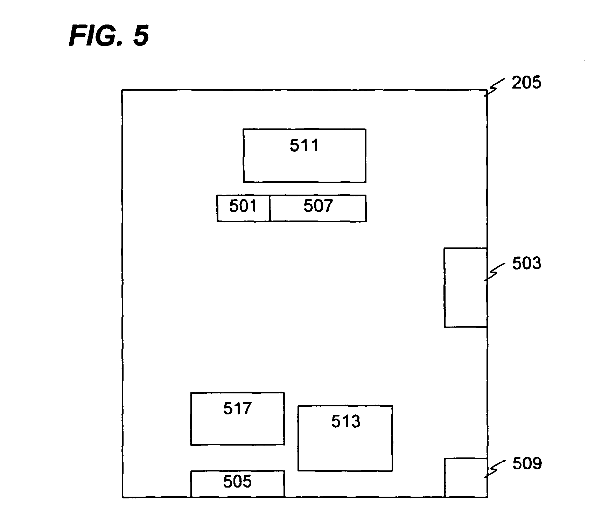

Figure 5 shows a wireless mobile computing device 205, such as a PDA (personal digital assistant) or a notebook computer. The PDA 205, for example, includes memory (for example, in the form of RAM and/or ROM) 507, a processor 511, a display 513, a wireless communication device 509 and an audio output device 505. Optionally the PDA may include a flash memory card 503; for example, an SD (Secure Digital) card.

The PDA also includes various software functions such as management software 501 and a media player 517.

The management software 501 is stored within the memory 507. Alternatively the management software 501 may be stored on a removable disk or card, or any other type of storage medium compatible for use with a PDA. Also, the management software 501 may be downloaded via the Internet, using the media server modem 311, and then transferred to the PDA 205 via the wireless communication link where it is stored and executed on the PDA.

The wireless communication device 509 of the PDA 205 allows wireless communication between the PDA 205 and any other device that has wireless communication means and is within range.

A replica of the database stored on the media server 203 is sent to the PDA 205 upon a request by the user of the PDA 205. If at any time the user alters the replica database stored on the PDA 205, an automatic update is made to the database on the media server 203 via the wireless communication devices (509 and 309). This allows the database stored on the PDA 205 and the media server 203 to be kept up to date at the same time.

It is also possible for the user of the system to use the PDA 205 to create a custom playlist of the media files stored within the database; the user may also create random playlists. Further functions using the PDA 205 may also be carried out, such as executing a text search for specific artists, or specific names of media files, editing the information stored related to the media file for example, artists, album name and track details.

Other tasks that the user can carry out on the PDA 205 include creating, amending and deleting genre grouping of the media files stored, allocating specific genres to certain types of media files and storing, moving and deleting the media files. It is also possible to use the PDA 205 to allocate and organise different genres of media, different albums or different artists to be played in certain locations.

Included in the media file distribution system 200 is a first satellite device 207. The first satellite device 207 includes a media player 417, a playlist manipulator 415 and a wireless communication device 409. The wireless communication device 409 is of the same type as the wireless communication devices (309 & 509) on the media server 203 and the PDA 205

The wireless communication devices (309, 409 and 509) of the system 200 are able to communicate independently with each other or any other suitable wireless communication device within range. This results in the formation of a peer-to-peer communication network. It is therefore possible for a user of the system to use the PDA 205 to cause a media file stored on the media server 203 to be played either on the server 203 or via any number of devices within direct or indirect communication range of the media server 203, as described below.

For example, a user may request a media file or group of media files to be played in the location where the media server 203 is located, by selecting on a menu of the PDA 205 the location in which the media server 203 is located.

Upon start-up of the system, a wireless communication channel is opened up between the wireless devices of the system using the WLAN 802.11 b protocol.

The user selects a media file or group of media files from the replica database stored on the PDA 205 and the PDA 205 communicates with the media server 203 over the WLAN.

Communication between the media server 203 and the PDA 205 is preferably encrypted by standard encryption means known to a skilled person, however it would also be possible to communicate without any encryption.

The encryption is used to stop non authorised people from accessing the data being transferred between the various wireless devices of the system, and can also be used to provide a filtering means to ensure the data is transferred successfully without excessive noise being introduced into the data signals.

The PDA 205 sends a request to the playlist manipulator 315 on the media server 203 for the selected media file or group of files to be played at the media server location. The playlist manipulator 315 adds the media file or group of media files to the playlist of the media player 317 located on the media server 203.

The database server 307 then holds references to the files being played so they are not deleted during playback.

The media player 317 then processes the media files and provides them to the output port 325 of the media server 203, whereupon the media files are provided to the media output device 319 connected to the output port 325. The media output device 319 may, for example, be an amplifier and speakers or video display screen, or any other device capable of providing an output for media files.

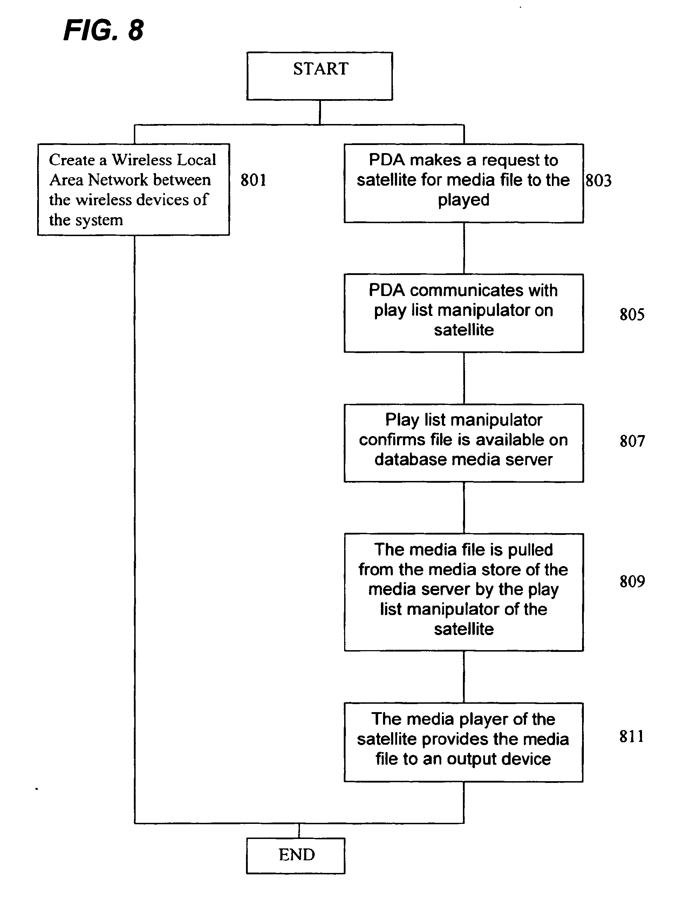

A user may also request that a media file or group of media files is played in the location where a first satellite device 207 is located, for example by selecting on the menu of the PDA 205 the location of the first satellite device 207, see step 803 in Figure 8.

A WLAN connection is created upon start-up of the system as discussed above, and as shown in Figure 8, step 801.

The user selects a media file or group of media files from the replica database stored on the PDA 205. The PDA 205 then communicates with the first satellite device 207 via the wireless communication devices (409 & 509).

Communication between the first satellite device 207 and the PDA 205 may or may not be encrypted as discussed above.

The PDA 205 sends a request to the playlist manipulator 415 located on the first satellite device 207 (step 805). The playlist manipulator 415 on the first satellite device 207 checks the database of the media server 203 to see if the media file exists (step 807), and if not to see whether any equivalent encoded version of that media file exists by looking for similarly named files with different extensions. If the file exists on the database of the media server 203, the first satellite device 207 receives the media file from the media server 203 via the wireless communication devices (309 and 409) (step 809).

The media file is transferred from the media server 203 to the first satellite device 207 in the following manner. The data file at the media server is read from the hard disk and sent along a data bus to the WLAN card. The WLAN card outputs the data over the wireless network as soon as it is received, using the 802.11b protocol. As soon as the WLAN card of the satellite receives the data sent from the media server it is sent via a data bus to the media file player.

However, if the only media file available for playing is in a format such that the media file is too large to be transferred, for example an audio wav file, then the media server 203 sends a message to the first satellite device 207 informing the first satellite device 207 that the file is not available.

If the media file is available for playing, the file is added to the playlist of the media player 417 located on the first satellite device 207 allowing the media player 417 to process the media file and provide the media file to the output port 425 of the first satellite device 207 (step 811).

The database server 307 then places references to the files in the playlist table.

The media file is then provided to the first satellite output device 419 connected to the output port 425. As above, the output device 419 may for example be an amplifier and speakers or video display screen, or any other suitable output device.

Alternatively, a user may request a media file or group of media files to be played locally, i.e. on the PDA 205. For example a 'local play' option may be selected on the menu of the PDA 205.

The user selects a media file or group of media files from the replica database stored on the PDA 205 and the PDA 205 communicates with the media server 203 to see if a wireless communication channel can be opened as described above.

The PDA 205 sends a request to the playlist manipulator 315 on the media server 203 for the selected media file or group of files to be played locally on the PDA 205. The PDA 205 receives the media file from the media server 203 using the wireless communication channel in the same way as the satellite . The media player 517 located on the PDA 205 may then process the media file and provide an output to the video display 513 and/or the audio output device 505 of the PDA 205.

Alternatively, the flash memory card 503 on the PDA 205 may be utilised to store the received media files. This will allow the user to access and play the media files directly from the flash memory 503 without further need to communicate with the media server 203, allowing portability of the media files.

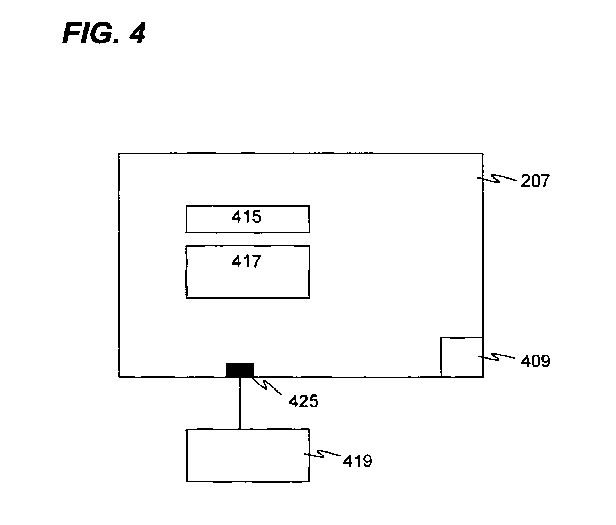

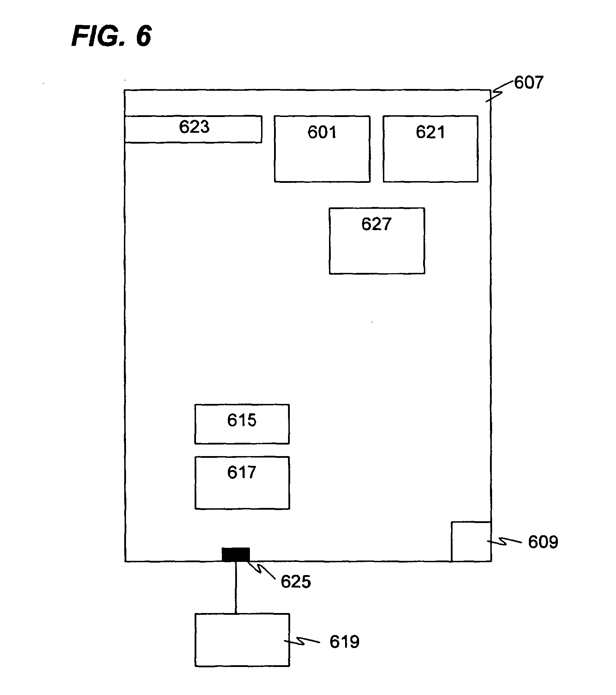

A second satellite device 607 as shown in Figure 6 may be used alongside or instead of a first satellite device 207 as shown in Figure 4 described above. Wherein, the second satellite device 607 includes a drive 623, a media player 617, a playlist manipulator 615, a wireless communication device 609, an output port 625 and second satellite output device 619. As well as these components, which are used in the first satellite device 207 described above, the following components are also used: a ripping device 601, memory storage 627 and an encoder 621.

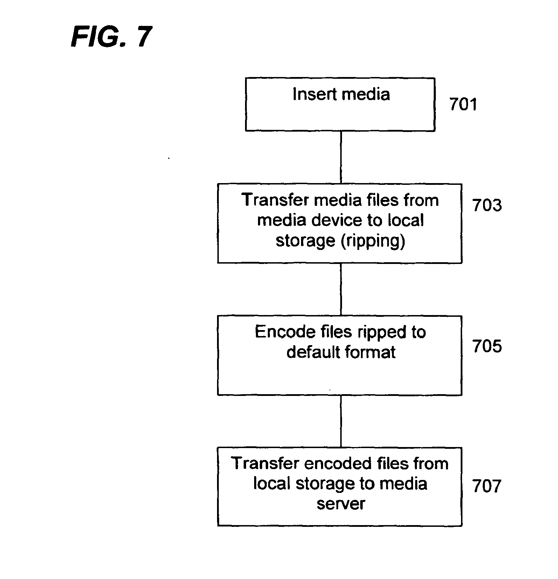

The second satellite device 607 allows for a user to insert a media device, see step 701 of Figure 7, such as a CD or DVD into the drive 623. The media files stored on the media device are automatically ripped (step 703) in the same manner as described above for the media server 203. However, the files are ripped from the media device and stored in a local hard disc 627 of the second satellite device 607. Alternatively, the files may be stored by any other means, such as RAM. Upon ripping of the file it is preferable to encode the media file (step 705) before it is sent to the media server 203, via the wireless communication devices (309 & 609), for storage in the database of the media server 203.

In the case of music media files, and in particular wav files, as the wav files are particularly large compared with compression coded files in a different format, such as mp3 or wma, it is undesirable to transfer a media file not compression coded to the media server 203. Therefore, the encoder 621 carries out automatic compression coding of any ripped wav files.

Upon completion of the ripping and encoding of all the media files on the media device, the encoded files are transferred (step 707) in bulk to the media server 203 over a communications link previously set-up between the second satellite device 607 and the media server 203. It is however, also possible for each individual media file to be ripped and encoded and transferred to the media server 203 separately.

The use of the second satellite device 607 allows users of this system to transfer their media files from a cumbersome format, such as CD or DVD, to the media store 305, such as a hard disk drive, of the media server 203 without having to be located near to the media server 203. This allows the media server 203 to be located separately and out of the way from the second satellite device 607, for example in a storage room or cellar, and so does not utilise living space at the user's premises.

Also, it is possible for a user to select on the PDA 205 for a file to be played in the location of the second satellite system 607, in the same manner as the selection of media files to be played on the first satellite system 207 described above. In this case the wireless communication device 609, the playlist manipulator 615, the media player 617, the output port 625 and the second satellite output device 619 are utilised to transfer files from the media server 203, in the same manner as that described above, to be played on the second satellite output device 619.

A user of the media file distribution system of the first and second embodiments may make a request for a media file to be played on the media server, a satellite device or the PDA 205 by requesting a media file to be played using the PDA 205 from any location within wireless communication distance of a component of the system. The PDA 205 only needs to be within communication distance of at least one of the components of the system, as the request data sent by the PDA 205 can be transferred via any number of satellite devices in order to reach the media server 203.

It is therefore possible for a user of this system to select which room or location the media file is to be played in, from anywhere within range of the wireless communication device of the media server 203, or the first or second satellite devices (207 & 607), without the requirement of using a further computer hub device.

### FURTHER EMBODIMENTS

It will be clear to the skilled person that any number or type of satellites may be used with a media server and a handheld mobile computing device to provide a flexible and fully expandable system.

For example a system may comprise a media server stored out of the way, with any number of first satellite devices located around the user's premises in different rooms, and any number of second satellite devices located in specific locations for easy access in order to add media files to the media server.

This arrangement provides the flexibility of providing as many outputs for media files as the user desires, as well as providing as many points where the media files may be transferred to the media server as required, all of the parts of the system being connected together to form a peer-to-peer network. All this is possible while at the same time being able to control the playing of any of the media files stored on the media server, in any location where satellites are located, or indeed at the location of the media server.

It will also be clear to a skilled person that as well as the wireless mobile computing device being a PDA, it may also be a device such as a notebook computer, or any mobile personal computer with wireless communication capabilities.

It will also be clear to a skilled person that media files may be downloaded from the Internet and stored in the media store 305 of the media server 203.

It will further be clear to a skilled person that any type of optical media device may be used with this system, such as CD (compact disk), DVD-E (digital video/versatile disk - erasable), DVD-R (digital video/versatile disk - recordable), DVD-ROM (digital video/versatile disk - read only memory), CD-ROM (compact disk - read only memory), CD-R (compact disk - recordable), CD-RW (compact disk - rewritable) and VCD (video compact disk).

It will further be clear to a skilled person that any type of media files may be used with this system, such as mp3, wav, wma, mpg, avi, wmv etc.

It will further be clear to a skilled person that the above described system and method may be used to rip one media file from a media device while at the same time encoding files that have already been ripped.

It will further be clear to the skilled person that the user can change options when encoding such as the sampling frequency, bits per second, and whether the resultant encoded file is in stereo or mono.

It will further be clear to a skilled person that the wireless communication means may utilise any form of wireless communication, such as, for example, 802.11a, 802.11b, Bluetooth or Infrared.

## Claims

1. A media file distribution system (200) comprising a media server (203) and at least one satellite unit (607),
the media server (203) comprising a media file storage means (305) adapted to store one or more media files, a first wireless communication means (309), and a first media file transfer means (323) adapted to transfer one or more media files stored on a first medium to a second medium,
the satellite unit (607) comprising a second wireless communication means (609) and a first output means (625) adapted to play the one or more media files stored on the media server (203), the system **characterised by**:
the satellite unit (607) further comprising a second media file transfer means (623) adapted to transfer further media files stored on a third medium to a fourth medium and a media file conversion means (601) adapted to convert the one or more transferred further media files from an original format to a format other than the original format,
wherein the second wireless communication means (609) in association with the first wireless communication means (309) is adapted to transfer the converted further media files to the media file storage means (305) on the media server (203).

2. The system of claim 1 further comprising a wireless mobile computing means;
the wireless mobile computing means comprising a processing means, a display means and memory means, the wireless mobile computing means further arranged to run management software that interfaces the components of the media server, the satellite unit and the wireless mobile computing means, wherein the management software on the wireless mobile computing means initiates the one or more media files stored on the media server to be played through the satellite unit.

3. The system of claim 1 wherein the one or more media files stored in the media file storage means are played through the media server.

4. The system of claim 1 wherein the media server further comprises a media file conversion means that converts the one or more transferred media files from an original format to a format other than the original format.

5. The system of claim 1 wherein the media server further comprises a routing means that routes data associated with the one or more media files to an external data source and receives further data associated with the one or more media files from the external data source.

6. The system of claim 1 wherein the media files are downloaded from the Internet.

7. A method of distributing media files comprising the steps of:
storing media files in a media file storage means (305) on a media server (203);
setting up a wireless communication channel between the media server (203) and at least one satellite unit (607);
initiating the playing of a media file stored on the media server (203) so the media file is played through the satellite unit (607);
transferring one or more media files from a first medium onto a second medium using a first media file transfer means (323) on the media server (203); the method **characterised by** the steps of:
transferring one or more further media files from a third medium onto a fourth medium using a second media file transfer means (623) on the satellite unit (607); and
converting the one or more transferred further media files from an original format to a format other than the original format; and
transferring the converted further media files to the media file storage means (305) using the wireless communication channel.

8. A method of claim 7 further comprising the steps of:
setting up one or more wireless communication channels between the media server, the satellite unit and a wireless mobile computing means;
initiating the playing of the media file using management software executed on the wireless mobile computing means.

9. The method of claim 7 further comprising the step of:
playing the one or more media files through the media server.

10. The method of claim 7 further comprising the step of:
converting one or more transferred media files from an original format to a format other than the original format.

11. The method of claim 7 further comprising the steps of:
routing data associated with the media file to an external data source; and
receiving further data associated with the media file from the external data source.

12. The method of claim 7 further comprising the step of:
downloading the one or more media files from the Internet before storing the one or more media files in the media file storage means.

13. The system of claims 1 to 6 or the method of claims 7 to 12 wherein the media file storage means is a hard disk drive.

14. The system of claims 1 to 6 or the method of claims 7 to 12 wherein the media files are stored in a database format.

15. The system of claims 1 to 6 or the method of claims 7 to 12 wherein the first or second medium is an optical disk.

16. The system of claims 1 to 6 or the method of claims 7 to 12 wherein the media files are music files.

17. The system or method of claim 16 wherein the music files are compression coded.

18. The system of claims 1 to 6 or the method of claims 7 to 12 wherein the media files are video files.

19. The system or method of claim 18 wherein the video files are compression coded.

20. The system of claims 1 to 6 or the method of claims 7 to 12 wherein the wireless mobile computing means is a personal digital assistant.

21. The system of claims 1 to 6 or the method of claims 7 to 12 wherein the wireless mobile computing means is a notebook computer.

22. The system of claims 1 to 6 or the method of claims 7 to 12 wherein data and media files sent between the media server, the one or more satellite units and the wireless mobile computing means are encrypted.

## Patentansprüche

1. Mediadatei-Distributionssystem (200), umfassend einen Media-Server (203) und mindestens eine Satelliteneinheit (607),
wobei der Media-Server (203) ein Mediadatei-Speichermittel (305) zum Speichern einer oder mehrerer Mediadateien, ein erstes drahtloses Kommunikationsmittel (309) und ein erstes Mediadatei-Übertragungsmittel (323) zur Übertragung einer oder mehrerer auf einem ersten Medium gespeicherten Mediadateien auf ein zweites Medium umfasst,
wobei die Satelliteneinheit (607) ein zweites drahtloses Kommunikationsmittel (609) und ein erstes Ausgabemittel (625) zum Abspielen der einen oder der mehreren im Media-Server (203) gespeicherten Mediadateien umfasst, wobei das System **dadurch gekennzeichnet ist, dass**
die Satelliteneinheit (607) ferner ein zweites Mediadatei-Übertragungsmittel (623) zur Übertragung weiterer auf einem dritten Medium gespeicherten Mediadateien auf ein viertes Medium und ein Mediadatei-Umwandlungsmittel (601) zur Umwandlung der einen oder der mehreren übertragenen weiteren Mediadateien aus einem ursprünglichen Format in ein anderes als das ursprüngliche Format umfasst,
wobei das zweite drahtlose Kommunikationsmittel (609) in Verbindung mit dem ersten drahtlosen Kommunikationsmittel (309) darauf eingerichtet ist, die umgewandelten weiteren Mediadateien an das Mediadatei-Speichermittel (305) auf dem Media-Server (203) zu übertragen.

2. System nach Anspruch 1, ferner umfassend ein drahtloses mobiles Berechnungsmittel;
wobei das drahtlose mobile Berechnungsmittel ein Verarbeitungsmittel, ein Anzeigemittel und ein Speichermittel umfasst und ferner auf die Benutzung von Managementsoftware eingerichtet ist, die eine Schnittstelle mit den Komponenten des Media-Servers, der Satelliteneinheit und des drahtlosen mobilen Berechnungsmittel aufweist, wobei die Managementsoftware auf dem drahtlosen mobilen Berechnungsmittel die eine oder die mehreren auf dem Media-Server gespeicherten Mediadateien initiiert, um durch die Satelliteneinheit abgespielt zu werden.

3. System nach Anspruch 1, wobei die eine oder die mehreren im Mediadatei-Speichermittel gespeicherten Mediadateien durch den Media-Server abgespielt werden.

4. System nach Anspruch 1, wobei der Media-Server ferner ein Mediadatei-Umwandlungsmittel umfasst, mit dem die eine oder die mehreren übertragenen Mediadateien aus einem ursprünglichen Format in ein anderes als das ursprüngliche Format umgewandelt werden.

5. System nach Anspruch 1, wobei der Media-Server ferner ein Routingmittel umfasst, das mit der einen oder den mehreren Mediadateien verknüpfte Daten zu einer externen Datenquelle routet und weitere mit der einen oder den mehreren Mediadateien verknüpfte Daten von der externen Datenquelle empfängt.

6. System nach Anspruch 1, wobei die Mediadateien vom Internet heruntergeladen werden.

7. Verfahren zur Distribution von Mediadateien, umfassend folgende Schritte:
Speichern der Mediadateien in einem Mediadatei-Speichermittel (305) auf einem Media-Server (203);
Einrichten eines drahtlosen Kommunikationskanals zwischen dem Media-Server (203) und mindestens einer Satelliteneinheit (607);
Initiieren des Abspielens der auf dem Media-Server (203) gespeicherten Mediadatei, so dass die Mediadatei durch die Satellitendatei (607) abgespielt wird;
Übertragen einer oder mehrerer weiterer Mediadateien von einem ersten Medium an ein zweites Medium mit Hilfe eines ersten Mediadatei-Übertragungsmittels (323) auf dem Media-Server (203); wobei das Verfahren durch folgende Schritte **gekennzeichnet** ist:
Übertragen einer oder mehrerer Mediadateien von einem dritten an ein viertes Medium mit Hilfe eines zweiten Mediadatei-Übertragungsmittels (623) auf der Satelliteneinheit (607); und
Umwandeln der einen oder der mehreren übertragenen weiteren Mediadateien aus einem ursprünglichen Format in ein anderes als das ursprüngliche Format; und
Übertragen der umgewandelten weiteren Mediadateien an das Mediadatei-Speichermittel (305) über den drahtlosen Kommunikationskanal.

8. Verfahren nach Anspruch 7, ferner umfassend folgende Schritte:
Einrichten eines oder mehrerer drahtlosen Kommunikationskanäle zwischen dem Media-Server, der Satelliteneinheit und einem drahtlosen mobilen Berechnungsmittel;
Initiieren des Abspielens der Mediadatei mit Hilfe von Managementsoftware, die auf dem drahtlosen mobilen Berechnungsmittel ausgeführt wird.

9. Verfahren nach Anspruch 7, ferner umfassend folgenden Schritt:
Abspielen der einen oder der mehreren Mediadateien durch den Media-Server.

10. Verfahren nach Anspruch 7, ferner umfassend folgenden Schritt:
Umwandeln einer oder mehrerer übertragenen Mediadateien aus einem ursprünglichen Format in ein anderes als das ursprüngliche Format.

11. Verfahren nach Anspruch 7, ferner umfassend folgende Schritte:
Routen der mit der Mediadatei verknüpften Daten zu einer externen Datenquelle; und
Empfangen weiterer mit der Mediadatei verknüpften Daten von der externen Datenquelle.

12. Verfahren nach Anspruch 7, ferner umfassend folgenden Schritt:
Herunterladen der einen oder der mehreren Mediadateien vom Internet, bevor die eine oder die mehreren Mediadateien in dem Mediadatei-Speichermittel gespeichert werden.

13. System nach Anspruch 1 bis 6 oder Verfahren nach Anspruch 7 bis 12, wobei das Mediadatei-Speichermittel ein Festplattenlaufwerk ist.

14. System nach Anspruch 1 bis 6 oder Verfahren nach Anspruch 7 bis 12, wobei die Mediadateien in einem Datenbankformat gespeichert werden.

15. System nach Anspruch 1 bis 6 oder Verfahren nach Anspruch 7 bis 12, wobei das erste oder zweite Medium eine optische Platte ist.

16. System nach Anspruch 1 bis 6 oder Verfahren nach Anspruch 7 bis 12, wobei die Mediadateien Musikdateien sind.

17. System oder Verfahren nach Anspruch 16, wobei die Musikdateien kompressionscodiert sind.

18. System nach Anspruch 1 bis 6 oder Verfahren nach Anspruch 7 bis 12, wobei die Mediadateien Videodateien sind.

19. System oder Verfahren nach Anspruch 18, wobei die Videodateien kompressionscodiert sind.

20. System nach Anspruch 1 bis 6 oder Verfahren nach Anspruch 7 bis 12, wobei das drahtlose mobile Berechnungsmittel ein PDA (Personal Digital Assistant) ist.

21. System nach Anspruch 1 bis 6 oder Verfahren nach Anspruch 7 bis 12, wobei das drahtlose mobile Berechnungsmittel ein Notebook-Computer ist.

22. System nach Anspruch 1 bis 6 oder Verfahren nach Anspruch 7 bis 12, wobei die Daten und Mediadateien, die zwischen dem Media-Server, der einen oder den mehreren Satelliteneinheiten und dem drahtlosen mobilen Berechnungsmittel gesendet werden, verschlüsselt sind.

## Revendications

1. Système de distribution de fichiers de média (200) comprenant un serveur de média (203) et au moins une unité satellite (607),
le serveur de média (203) comprenant des moyens de stockage de fichiers média (305) adaptés pour stocker un ou plusieurs fichier(s) média, des premiers moyens de communication sans fil (309), et des premiers moyens de transfert de fichiers média (323) adaptés pour transférer un ou plusieurs fichier(s) média stocké(s) sur un premier support vers un second support,
l'unité satellite (607) comprenant des seconds moyens de communication sans fil (609) et des premiers moyens de sortie (625) adaptés pour lire le ou les fichier(s) média stockés dans le serveur média (203), le système étant **caractérisé en ce que**:
l'unité satellite (607) comprend, de plus, des seconds moyens de transfert de fichiers média (623) adaptés pour transférer des fichiers média supplémentaires stockés sur un troisième support vers un quatrième support et des moyens de conversion de fichiers média (601) adaptés pour convertir le ou les fichier(s) média supplémentaire(s) transféré(s) d'un format initial à un format autre que le format initial,
dans lequel les seconds moyens de communication sans fil (609) en association avec les premiers moyens de communication sans fil (309) sont adaptés pour transférer les fichiers média supplémentaires convertis vers les moyens de stockage de fichiers média (305) dans le serveur média (203).

2. Système selon la revendication 1 comprenant, de plus, des moyens d'ordinateur mobile sans fil ;
les moyens d'ordinateur mobile sans fil comprenant des moyens de traitement, des moyens d'affichage et des moyens de mémoire, les moyens d'ordinateur mobile sans fil étant, de plus, agencés pour exploiter un logiciel de gestion qui fait interface avec les composants du serveur média, l'unité satellite et les moyens d'ordinateur mobile sans fil, dans lequel le logiciel de gestion dans les moyens d'ordinateur mobile sans fil initie le ou les fichiers média stocké(s) sur le serveur média pour être lus à travers l'unité satellite.

3. Système selon la revendication 1 dans lequel le ou les fichier(s) média stocké(s) dans les moyens de stockage de fichiers média sont lus à travers le serveur média.

4. Système selon la revendication 1 dans lequel le serveur média comprend, de plus, des moyens de conversion de fichiers média qui convertissent le ou les fichier(s) média transférés d'un format initial à un format autre que le format initial.

5. Système selon la revendication 1 dans lequel le serveur média comprend, de plus, des moyens d'acheminement qui acheminent des données associées à un ou à plusieurs fichier(s) média vers une source de données externe et reçoit d'autres données associées à un ou à plusieurs fichier(s) média à partir de la source de données externe.

6. Système selon la revendication 1 dans lequel les fichiers média sont téléchargés à partir du réseau Internet.

7. Procédé de distribution de fichiers média comprenant les étapes consistant à :
stocker des fichiers média dans des moyens de stockage de fichiers média (305) sur un serveur média (203) ;
établir un canal de communication sans fil entre le serveur média (203) et au moins une unité satellite (607);
initier la lecture d'un fichier média stocké sur le serveur média (203) de façon que le fichier média soit lu à travers l'unité satellite (607) ;
transférer un ou plusieurs fichiers média d'un premier support sur un second support en utilisant des premiers moyens de transfert de fichiers média (323) sur le serveur média (203); le procédé étant **caractérisé par** les étapes consistant à:
transférer un ou plusieurs fichier(s) média d'un troisième support sur un quatrième support en utilisant des seconds moyens de transfert de fichiers média (623) sur l'unité satellite (607) ; et
convertir le ou les fichier(s) média supplémentaire (s) transféré(s) d'un format initial à un format autre que le format initial; et
transférer les fichiers média supplémentaires convertis vers les moyens de stockage de fichiers média (305) en utilisant le canal de communication sans fil.

8. Procédé selon la revendication 7, comprenant, de plus, les étapes consistant à:
établir un canal ou plusieurs canaux de communication sans fil entre le serveur média, l'unité satellite et des moyens d'ordinateur mobile sans fil ;
initier la lecture du fichier média en utilisant un logiciel de gestion exécuté dans les moyens d'ordinateur mobile sans fil.

9. Procédé selon la revendication 7 comprenant, de plus, l'étape consistant à :
lire le ou les fichier(s) média à travers le serveur média.

10. Procédé selon la revendication 7 comprenant, de plus, l'étape consistant à :
convertir un ou plusieurs fichier(s) média transférés d'un format initial à un format autre que le format initial.

11. Procédé selon la revendication 7 comprenant, de plus, les étapes consistant à :
acheminer des données associées au fichier média vers une source de données externe ; et
recevoir des données supplémentaires associées au fichier média à partir de la source externe de données.

12. Procédé selon la revendication 7 comprenant, de plus, l'étape consistant à :
télécharger le ou les fichiers média à partir du réseau Internet avant de stocker le ou les fichier(s) média dans les moyens de stockage de fichiers média.

13. Système selon les revendications 1 à 6 ou procédé selon les revendications 7 à 12 dans lequel les moyens de stockage des fichiers média sont une unité de disque dur.

14. Système selon les revendications 1 à 6 ou procédé selon les revendications 7 à 12 dans lequel les fichiers média sont stockés suivant un format de base de données.

15. Système selon les revendications 1 à 6 ou procédé suivant les revendications 7 à 12 dans lequel le premier ou le second support est un disque optique.

16. Système selon les revendications 1 à 6 ou procédé suivant les revendications 7 à 12 dans lequel les fichiers média sont des fichiers de musique.

17. Système ou procédé selon la revendication 16 dans lequel les fichiers de musique sont codés par compression.

18. Système selon les revendications 1 à 6 ou procédé suivant les revendications 7 à 12 dans lequel les fichiers média sont des fichiers vidéo.

19. Système ou procédé selon la revendication 18 dans lequel les fichiers vidéo sont codés par compression.

20. Système selon les revendications 1 à 6 ou procédé selon les revendications 7 à 12 dans lequel les moyens d'ordinateur mobile sans fil sont constitués d'un assistant numérique personnel.

21. Système selon les revendications 1 à 6 ou procédé selon les revendications 7 à 12 dans lequel les moyens d'ordinateur mobile sans fil sont constitués d'un ordinateur bloc-notes.

22. Système selon les revendications 1 à 6 ou procédé selon les revendications 7 à 12 dans lequel les fichiers de données et les fichiers média transmis entre le serveur média, l'unité ou les unités satellite(s) et les moyens d'ordinateur mobile sans fil sont soumis à un cryptage.
